(19) Europäisches Patentamt

European Patent Office

Office européen des brevets

(11) **EP 1 586 899 A1**

## (12) EUROPEAN PATENT APPLICATION

(43) Date of publication:
**19.10.2005 Bulletin 2005/42**

(51) Int Cl.[7]: **G01N 33/483**

(21) Application number: **04007388.4**

(22) Date of filing: **26.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **BRACCO IMAGING S.p.A.**
**20134 Milano (IT)**

(72) Inventors:
- **Alfieri, Goffredo**
  **20134 Milano (IT)**
- **Biondi, Luca**
  **20134 Milano (IT)**

- **Calabi, Luisella**
  **20134 Milano (IT)**
- **Demiranda, Mario**
  **20134 Milano (IT)**
- **Paleari, Lino**
  **20134 Milano (IT)**
- **Ghelli, Stefano**
  **20134 Milano (IT)**

(74) Representative: **Macchetta, Francesco**
**Bracco Imaging S.p.A.**
**Intellectual Property Dept.**
**Via Egidio Folli, 50**
**20134 Milano (IT)**

(54) **Method for in vitro determination of cellular uptake of exogenous substances by means of shift agents and magic angle spinning nuclear magnetic resonance**

(57)    The present invention deals with a method for *in vitro* quantitative determination of cellular uptake of exogenous substances characterized in that it comprises applying MAS-NMR spectroscopy to an *in vitro* cellular sample, in combination with a shift agent, and which includes the following steps:

**1)** selection of the shift agent (SA) and nucleus combination to be employed for the measurement of cellular uptake of the exogenous substance (EXO) under investigation;

**2)** determination of the cellular compartment/s (CC/s) in which said exogenous substance (EXO) distributes;
**3)** measurement of said exogenous substance (EXO) compartmental concentration, i.e. of said EXO cellular uptake.

**EP 1 586 899 A1**

**Description**

**FIELD OF THE INVENTION**

The present invention deals with a method for *in vitro* quantitative determination of cellular uptake of exogenous substances. Said method can be applied substantially to any type of *in vitro* sample, for example, cells, tissues and organs. Main application fields of the invention are: *a*) screening and development process stages of pharmaceutical lead compounds, contrast agents for imaging techniques, radio-sensitizers for photodynamic and neutron capture therapy (bio-availability, effectiveness, resistance and toxicity studies included); *b*) therapy follow-up; *c*) chemical toxicology; *d*) development process stages of pesticides.

**ABBREVIATIONS USED IN THE DESCRIPTION**

For sake of clarity and conciseness, a list of the abbreviations/acronyms most frequently used inside the following description is herewith enclosed.

| | |
|---|---|
| MAS-NMR | Magic-Angle-Spinning Nuclear Magnetic Resonance |
| CP-MAS | Cross Polarization Magic-Angle-Spinning |
| HR-MAS | High Resolution Magic-Angle-Spinning |
| MR | Magnetic Resonance |
| EXO/s | Exogenous substance/substances |
| ENDO/s | Endogenous naturally occurring substance/substances |
| CC/s | Cellular Compartment/Compartments |
| SA/s | Shift Agent/Agents |
| CA/s | Contrast Agent/Agents |
| LIS | Lanthanide Induced Shift |
| $LIS^{EXO}$ | Lanthanide Induced Shift of Exogenous substance (signal/signals) |
| $LIS^{ENDO}$ | Lanthanide Induced Shift of Endogenous substance (signal/signals) |
| [ ] | molar concentration |
| [a] | molar concentration of substance $a$ |
| $\rho^{EXO}$ | [SA]/[EXO], i.e. it represents the ratio: SA concentration to EXO concentration |
| $\rho^{ENDO}$ | [SA]/[ENDO], i.e. it represents the ratio: SA concentration to ENDO concentration |
| CC≠SA | Cellular compartment in which the SA is not present |
| CCSA | Cellular compartment in which the SA is present |
| $EXO_o$ | EXO substance present in extra-cellular compartment |
| $EXO_i$ | EXO substance present in intra-cellular compartment |
| SEM | Scanning Electronic Microscope |
| PDT | Photodynamic Therapy |
| NCT | Neutron Capture Therapy |
| MECM | Multi-photon Excitation Confocal Microscopy |
| ESR | Electron Spin Resonance |
| HRBC | Human Red Blood Cells |

Bibliographic references included in the specification as numbers in brackets are detailed later on in the paragraph titled "References".

**BACKGROUND OF THE INVENTION**

In principle, cellular-uptake quantitative determination can give relevant information about, for example, bio-availability, effectiveness and toxicity of EXOs. That may result important for drugs and in general for all substances which must not have biological activity, but, at the same time, must specifically accumulate inside human cells (examples are radio-sensitizers for PDT and NCT, as well as CAs for diagnostic use). In the pharmaceutical field, in particular, cellular uptake represents one of the milestones on which the whole drug development process is based, starting from the recognition of the most promising lead compounds, up to the final formulation of the drug (i.e. the formulation ready for administration to human and/or animal beings). In the diagnostic field, cellular-uptake measurement is important because it is closely related to tissue and/or organ specificity of the CAs used. It is known that tissue/organ specificity is usually connected both with effectiveness and toxicity of these substances. That means that the capability of obtaining reliable cellular-uptake measurements represents the starting point for the development of new CAs, which are able, for example, to induce high contrast imaging at lower dosages. Analogous considerations can be done for radio-sensitizers to be used in PDT and NCT. In toxicology, measuring EXOs cellular uptake is important, because it is directly related to the toxicity of the EXOs. Areas of competence for cellular uptake are, therefore, diagnosis and care of diseases (therapy follow-up included), and toxicology. Sometimes it is possible to confuse cellular uptake with organ uptake. Although these two topics are often closely related, they regard two different kind of uptake. Cellular uptake means accumulation of a given substance in the intra-cellular compartment, while organ uptake means accumulation in the whole organ. This latter feature does not necessarily mean cellular uptake because a given substance may accumulate into the organ, but in its extra-cellular compartments, for example, as a consequence of bonds or interactions with the molecules on the external layer of the cellular membrane.

The technical problem related to the measurement of EXOs cellular uptake substantially regards the following features:

- measurements should involve a parameter which is directly linked to cellular uptake, i.e. the EXO <u>compartmental concentration</u>;
- measurements should not require sample manipulations, to avoid changes of the concentrations of the species at equilibrium, as well as modifications of the functionality and/or the integrity of the cellular membrane (the fulfilment of this condition will make greater the reliability of the results and will also allow performing dynamic measurements, such as pharmaco-kinetic determinations);
- measurements should be applicable to the widest possible range of EXOs and samples.

Today, the methods utilized to determine EXOs cellular uptake only partially fulfil these requirements. Consequently, the need for a method of general applicability for EXOs cellular-uptake measurement is still waiting for a solution, in spite of the relevance of this problem for pharmaceutical research and for toxicology studies.

The commonly used analytical methods can be substantially divided into four groups:

**Group A -** In principle, the methods belonging to this group can be used to measure cellular uptake of all types of EXOs inside any type of cells or tissues. They are based on chemical and chemical-physical techniques which require sample pre-treatment, as a necessary step for the analysis. Said treatment is mandatory because the analytical techniques employed are only able to measure the total content of a substance, without distinguishing how it is shared out in the various CCs. The nature of the above mentioned pre-treatment depends on the employed analytical technique and on the type of sample. Anyway, whichever the treatment is, it always produces modifications on the cellular system, with consequent changes in the concentration of the species present in the cellular compartments at equilibrium, and/or changes of the mechanisms which govern the transport of substances across the cellular membrane. These effects may make the sample under analysis not representative of reality, with the consequence that the results of the analysis can be wrong or misleading. For example, when cells are cultured in liquid phase, the pre-treatment consists in the separation of said cells from the extra-cellular fluid; said method is performed by employing several washing steps and subsequent centrifugation. This treatment can change the concentrations at equilibrium and breaks part of the cells, a circumstance which means perfusion in the extra-cellular compartment of part of the intra-cellular fluid. As a result, part of the intra-cellular content is measured as extra-cellular content. On the other hand, when cells are cultured on semisolid or solid matrix, the situation can result even more critical because a vigorous treatment can be necessary in order to free the cells from the matrix. Under these conditions, changes of the concentrations of the species at equilibrium and modifications of the functionality and integrity of the cellular membrane, during sample preparation, are almost inevitable. When the study regards agglomerates of cells and strips of tissues, treatments can be even more invasive, because it is necessary to destroy the tissutal matrix in order to obtain isolated cells.

**Group B -** In the case of some particular EXOs, specific methods can be employed to measure cellular uptake, for example:

- if the EXO is a paramagnetic metal complex, a method based on ESR spectroscopy can be used (1);
- if the EXO is a gadolinium complex, measurements can be performed by observing the contrast enhancement in MR imaging (2);
- if the EXO is a manganese compound, the measure can be done by observing the line broadening of phosphorus signal in ATP $^{31}$P-NMR spectra (3);
- if the EXO is a substance containing atoms which are different from those naturally occurring inside the cells, i.e. atoms which are different from hydrogen, carbon, nitrogen, sodium, etc., SEM combined with micro-analysis can be utilized (unfortunately the main EXOs are organic molecules, therefore they cannot be measured by this technique);
- if the EXO has a fluorescent spectrum, well distinguishable from the ones produced by the ENDOs inside the sample, MECM (4,5) can be used (anyway, ENDOs usually contain a lot of organic chromophores, therefore the possibility to use MECM is limited to a little number of cases).

All these methods of group B have the advantage not to require cell treatment, but have the disadvantage that the measured parameters are only indirectly linked to cellular uptake. This means that the reliability of the results strongly depends on the type of model that links cellular uptake to the measured parameters. Moreover, these methods are usable only with a few of specific EXOs.

**Group C -** For metal ions such as Na+, K+, Li+, etc. (6,7,8) and for some endogenous metabolites (9), SAs combined to NMR spectra have been employed to measure the concentration ratio between the intra- and the extra-cellular content of said substances. This method has the double advantage that it does not need sample treatments and measuring compartmental concentrations, i.e. a parameter directly linked to the cellular uptake. Nevertheless, it can only measure the concentration ratio between intra- and extra-cellular EXO content, but it cannot measure the absolute EXO content in the various CC.

**Group D** - Shift of water signal induced by paramagnetic complexes have been observed with MAS-NMR, allowing the determination of cellular uptake of said paramagnetic complexes (10,11). Unfortunately, this procedure is usable only with paramagnetic complexes.

Summarizing:

- the reliability of the methods currently used is insufficient in most of the cases;
- it does not exist a method of general applicability; moreover some techniques, which could avoid sample treatment, can only be used in very particular cases;
- it is difficult, if not impossible, to standardize the present methodologies, because they are too much dependent on the nature of the sample, the nature of the substance under investigation, and the modality of sample handling;
- current *in vitro* tests imply high costs and long times, mainly because of the huge work necessary for the tuning of the method and for sample preparation.

The previously disclosed points raise serious questions about reliability and usefulness of *in vitro* data; however the state-of-the-art concerning *in vivo* cellular-uptake tests, which in principle are a possible alternative to the ones *in vitro,* is not better. In fact, although *in vivo* data are currently considered the "gold standard", their reliability is not doubt-free; in particular *in vivo* experiments have shown relevant drawbacks due to long experimental times, high costs (mainly due to animal stabling and to the cost of the staff engaged in handling animals and samples), ethical reasons.

Accordingly, reliable, fast, cheap and easy-to-do *in vitro* cellular-uptake tests are still a main issue for pharmaceutical research and, more in general, for research concerning bio-activity of substances which can accumulate inside cells.

The method, object of the present invention, seeks to overcome the drawbacks of the above mentioned methods, by fulfilling all the requirements for a general method for every type of EXOs cellular-uptake measurement.

In particular, the present invention shows the following advantages in comparison with the state-of-the-art:

- it allows non-invasive measurements. In the present description the term "non-invasive" is used with the meaning that the *in vitro* sample is not treated at all, or that the needed manipulation is so light as not to produce modifications of the concentration of the chemical species at equilibrium, nor modifications of the processes which govern the cellular up-take. In such a way, the sample maintains all its biological functionality intact;
- it allows to measure a parameter directly linked to the absolute concentration of the EXO in the different CCs. This aspect, together with the previous one, guarantees high reliability and reproducibility of the measured data and the possibility to replace a large number of the *in vivo* tests. For example, this feature also allows determining whether the condition of full "NMR visibility" is matched or no;
- the sensitivity of the measurements is the one typical for NMR spectroscopy; actually, micromolar concentrations are needed for medium strength magnetic fields, as well as sub-micromolar concentrations, when using high magnetic fields and cryogenic technology for probeheads;
- it allows the measurement of cellular uptake of a wide series of substances, with respect to a wide kind of *in vitro* samples, either in liquid or semisolid media, included strips of tissues, strips of organs and whole organs; this makes the method of general applicability;
- it consents to study the kinetics of cellular up-take, such as pharmaco-kinetic studies which are very difficult and onerous to carry out;
- it guarantees a high level of standardisation because it is based on a single technique, the MAS-NMR spectroscopy in combination with lanthanide SA, and it does not require complex sample treatments;

- it makes it possible to obtain easy and fast measurements, because NMR spectra can be acquired in few minutes;
- it makes it possible to utilize a substantial part of the experimental conditions, tuned for the cellular uptake of a substance, also for cellular up-take determination of other substances. In fact, the experimental conditions mainly depend on the type of samples, less on the type of molecules tested.
- A strong reduction of costs and time for experimentations is achieved.

## SUMMARY OF THE INVENTION

The present invention substantially deals with a method for *in vitro* quantitative determination of cellular uptake of EXOs.

Said method is based on the application on cellular *in vitro* samples of MAS-NMR spectroscopy, in combination with the use of suitable SAs, preferably selected from substances which contain metal ions of the lanthanide group.

The method of the present invention substantially comprises the following steps:

**1)** selection of the shift agent (SA) and nucleus combination to be employed for the measurement of cellular uptake of the exogenous substance (EXO) under investigation;

**2)** determination of the cellular compartment/s (CC/s) in which said exogenous substance (EXO) distributes;

**3)** measurement of said exogenous substance (EXO) compartmental concentration, i.e. of said EXO cellular up-take.

## EXPLAINATION OF THE FIGURES

Figure 1    is the example of a marker[ENDO] signal showing a single peak in absence of a SA. Trace *a*: spectrum in absence of SA; traces *b - g*: spectra in presence of SA.

Figure 2    is the example of a marker[ENDO] signal showing more than one peak in absence of a SA. Trace *a*: spectrum in absence of SA; trace *b - g*: spectra in presence of SA.

Figure 3    is the example of a marker [EXO] signal showing a single peak in absence of a SA. Trace *a:* spectrum in absence of SA; trace *b - f* spectra in presence of SA shared out in one CC only.

Figure 4    is the example of a marker [EXO] signal showing more than one peak, in absence of a SA. Trace *a*: spectrum in absence of SA; trace *b - f* spectra in presence of SA shared out in one CC only.

Figure 5    is the example of a marker [EXO] signal showing a single peak, in absence of a SA. Trace *a:* spectrum in absence of SA; trace *b -h:* spectra in presence of a SA shared out between intra- and extra-cellular compartments.

Figure 6    is the example of a marker [EXO] signal showing more than one peak, in absence of a SA. Trace *a*: spectrum in absence of SA; trace *b - h:* spectra in presence of SA shared out between intra- and extra-cellular compartments.

Figure 7    is the $^{23}$Na MAS-NMR spectra of a HRBC sample containing different amounts of Dy-BOPTA. Trace *a*: the spectrum of HRBC alone; traces *b - d*: the spectra of HRBC after progressive additions of Dy-BOPTA.

Figure 8    is the $^1$H NMR spectra of aspirin in D$_2$O.

Figure 9    is the graph of LIS $^{ASPIRIN}$ vs. $\rho^{ASPIRIN}$= [Dy-BOPTA]/[ASPIRIN]

Figure 10    is $^1$H MAS-NMR spectra of aspirin in HRBC suspension. T*race a:* spectrum of HRBC; *trace b*: same sample of trace *a* but after addition of aspirin (100 μl, 1M stock solution); *trace c*: same sample of trace *b* but after addition of Dy-BOPTA (80 μl, 0.1M stock solution).

## DETAILED DESCRIPTION OF THE INVENTION

As already mentioned in the foregoing, the method of the present invention comprises the use of MAS-NMR spectroscopy in combination with suitable SAs. By means of MAS technique, the NMR spectra result unaffected by shifts due to chemical shift anisotropy (CSA), dipole-dipole interactions and anisotropic component of bulk magnetic susceptibility (BMS) (12 - 15). Moreover, the lineshape in biological sample results improved, allowing a better differentiation between intra- and extra-cellular signals (16). That means that LIS induced by SA on the EXO signals, can be well detected and can occur, only as a consequence of direct interactions between SA and EXO, i.e. SA and EXO must stay in the same CC. Consequently, after the addition of the SA in the in vitro sample, two main behaviours can take place, with respect the condition in absence of the SA: the EXO NMR signals remain unchanged or they undergo to LIS. The EXO, corresponding to the unshifted signals, stays in CCs different from that/those occupied by the SA while, on the contrary, EXO corresponding to shifted signals, occupy the same CCs of SA. That allows a direct measurement of the cellular uptake of the EXO. In particular, whether unshifted and shifted EXO signals exist in the same sample, the ratio between the areas of these signals directly gives the distribution ratio of the EXO between the CCs.

The present invention comprises the following steps:

**1)** selection of the shift agent (SA) and nucleus combination to be employed for the measurement of cellular uptake of the exogenous substance (EXO) under investigation;

**2)** determination of the cellular compartment/s (CC/s) in which said exogenous substance (EXO) distributes;

**3)** measurement of said exogenous substance (EXO) compartmental concentration, i.e. of said EXO cellular uptake.

**Said selection of step 1)** preferably comprises:

a) recognising a set of possible candidates for said SA and nucleus combination, on the basis of the LIS produced on at least one signal belonging to said EXO;

b) recognising a set of possible candidates for said SA, on the basis of the LIS produced on at least one signal belonging to an endogenous substance (ENDO);

c) recognising a set of possible candidates for said SA, on the basis of the CC/s in which they distribute;

d) selecting said SA and nucleus combination, on the basis of the information gathered from points a), b) and c).

Regarding point a)

All substances containing a paramagnetic nucleus are able, in principle, to act as SA, but, in order not to modify the biological processes inside the *in vitro* sample, lanthanide complexes are most preferred for the scope of the present invention. Among them, preferred, non-limiting, examples of lanthanide complexes usable as SAs are selected from chelate complexes comprising:

- a ligand selected from: EDTA (ethylenediaminetetracetic acid); PCTA (3,6,9,15-tetraazabicyclo-[9.3.1]-pentadeca-1(15)11,13-triene-3,6,9-tris(methane phosphonic) acid); BOPTA ((4RS)-[4-carboxy-5,8,11-tris (carboxy methyl)-1-phenyl-2-oxa-5,8,11-triazatridecan-13-oicacid]) and/or derivatives thereof; DTPA (diethylenetriamine pentaacetic acid) and/or derivatives thereof; DOTA (1,4,7,10-tetraazocyclo-dodecane-N,N',N'',N'' -tetraacetic acid) and/or derivatives thereof; DO3A (1,4,7,10-tetra azacyclododecane-1,4,7-triacetic acid) and/or derivatives thereof; DOTP (1,4,7,10-tetraazacyclododecane-1,4,7,10-tetrakis (methane phosphonic) acid and/or derivatives thereof; ([$3\beta(R)$, $5\beta,12\alpha$]-3-[[4-[bis[2-bis(carboxymethyl)amino]-ethyl]amino]-4-carboxy-1-oxobutyl]amino]-12-hydroxycholan-24-oic acid); and

- a metal ion of the lanthanide group selected from: $Ce^{3+}$; $Pr^{3+}$; $Nd^{3+}$; $Pm^{3+}$; $Sm^{3+}$; $Eu^{3+}$; $Tb^{3+}$; $Dy^{3+}$; $Ho^{3+}$; $Er^{3+}$; $Tm^{3+}$; $Yb^{3+}$.

The preferred nucleus to be used (i.e. the one to be observed by the employed MAS-NMR technique), should allow an easy detection of the EXO signals. Usually, proton cannot be the better choice for this scope, because $^1H$-NMR spectra of biological samples most frequently show strong overcrowding and overlapping of peaks, due to the various interfering ENDOs naturally occurring in the sample. This consideration is valid also for $^{31}P$ NMR spectra. In this respect, carbon-13 or nitrogen-15 spectra are preferable, in those cases in which suitable isotopically enriched substances are available. More preferable are those nuclei which are not present in the naturally occurring ENDOs. In particular, fluorine-19, deuterium, boron-11 and sodium-23 are nuclei which can supply very good spectra.

To recognise the most suitable set of SAs and nuclei usable for quantitatively measuring cellular uptake of a given EXO, said EXO is dissolved in $D_2O$ and $LIS^{EXO}$ signals are measured, by employing different combinations of different SAs with different nuclei and by varying the ratio $\rho^{EXO}$ =[SA]/[EXO].

SAs and nuclei combinations inducing the largest $LIS^{EXO}$ signals are the ones potentially suitable for use with the EXO under investigation. The largest $LIS^{EXO}$ signal/s is/are preferred and from now on it/they will be defined as marker$^{EXO}$ signal/s.

Regarding point b).

The method of the present invention needs knowing, with high precision, the CC concentration of the SA (i. e., $[SA]_{CC}$) which implies to know, *at priori* or by experimental measures, the CCs where the SA share.

These data are obtained by measuring the LIS produced by the SA on, at least, one signal belonging to an suitable endogenous substance (ENDO).

In order to measure $[SA]_{CC}$ with high precision, it is necessary to chose, among the possible combinations SA-nucleus-ENDO, those producing the largest LIS$^{ENDO}$ signals. For this aim, it is necessary to employ ENDOs possessing functional groups which are able to interact with said SA. For example, if the SA is a lanthanide complex, as previously defined, suitable ENDOs could be water (i.e. observation of proton spectra) or the alkaline metal ions, such as Na$^+$ (i.e. observation of $^{23}$Na spectrum). In fact these two type of ENDOs supply very large LISs when lanthanide complexes are employed.

To recognise preferred ENDO and nucleus, each potential candidate for ENDO is dissolved in D$_2$O and LIS$^{ENDO}$ signals are measured by employing the best SAs resulting from previous point a), all the possible nuclei (compatible with the nature of ENDO) and by varying the ratio $\rho^{ENDO}$ = [SA]/[ENDO]. In such a way a graph LIS$^{ENDO}$ signal vs. $\rho^{ENDO}$ = [SA]/[ENDO] is built.

SAs-nuclei-ENDOs combinations inducing the largest LIS$^{ENDO}$ signals are the ones potentially suitable for the next steps. The largest LIS$^{ENDO}$ signal will be defined as marker $^{ENDO}$ signal.

It is worthwhile to mention that each SA-ENDO combination can produce the best result by using a nucleus different from those optimal for other SAs-ENDOs combinations and different from those employed for SAs-EXO combinations.

Regarding point c).

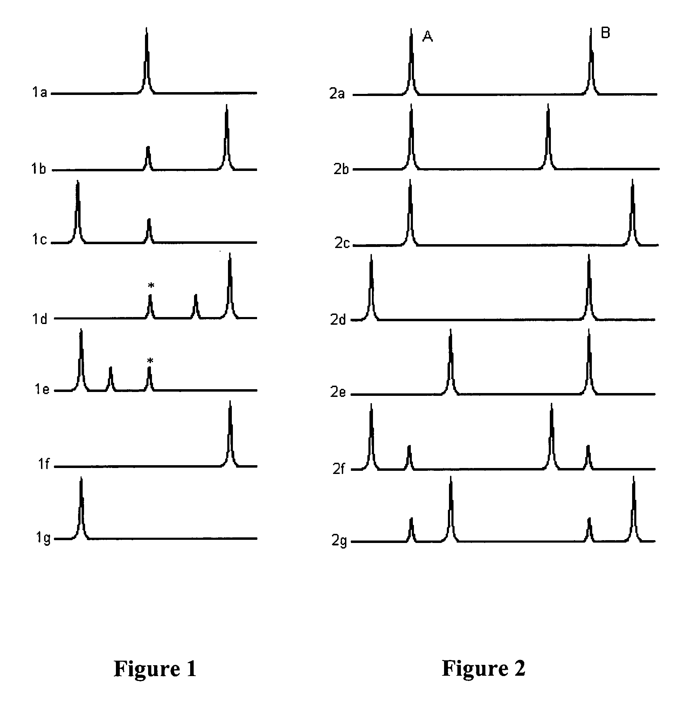

Point c consents the measurement of [SA]$_{CC}$, upon the identification of the CCs where the candidates SAs, deriving from the previous steps, distribute. To obtain this data, for all the preferred SAs-nucleus-ENDOs combinations, the MAS-NMR spectra of the *in vitro* sample are acquired, both in absence and in presence of the selected SA. SA concentration, [SA], is gradually increased up to the obtainment of a well visible and measurable LIS marker$^{ENDO}$ signal. The MAS-NMR spectra, acquired by this procedure, can show different behaviours, as reported in enclosed Figures 1 and 2 and hereinafter discussed.

*Figure 1 - traces a-g.* In trace a a marker$^{ENDO}$ signal is shown, in absence of the SA. In this case only one signal exists, in correspondence of the different CCs. Accordingly, in this case all the marker$^{ENDO}$ signals in the different CCs are isochronous (or the ENDO is present in only one CC). After the addition of a suitable amount of the SA, different situations can arise:

- the marker$^{ENDO}$ signal splits in two signals: the first one keeps the same frequency of the original signal (i.e. the one in absence of the SA), while the other signal shifts (trace *b* or *c*). In this case, all the SA stays in the CC corresponding to the shifted marker$^{ENDO}$ signal, i.e. the SA specifically accumulates in one single CC (or in different CCs in which all the marker$^{ENDO}$ signals are isochronous) ;
- the marker$^{ENDO}$ signal splits in more than two signals: one signal remains unshifted with respect to the original position (i.e. the one in absence of the SA), while all the other signals shift (trace *d* or *e*). In this case all the SA stays in the CCs correspondent to the shifted marker $^{ENDO}$ signals. If the signal labelled with (*) does not exist, the SA is distributed in all the possible CCs (in this case the marker$^{ENDO}$ signals are non-isochronous with each other);
- the marker $^{ENDO}$ signal does not split but shifts with respect to the original signal (i.e. the one in absence of the SA) (traces *f* or *g*). In this case the SA is distributed in all the possible CCs and the corresponding marker$^{ENDO}$ signals are all isochronous.

*Figure 2 - traces a - g.* In trace *a* it is disclosed a marker $^{ENDO}$ signal that, in absence of the SA, shows two (in general, many) signals (in this case represented by signal A and signal B) in correspondence of the various CCs. Following the addition of the SA, different situations can take place as described in the following:

- one marker$^{ENDO}$ signal shifts with respect to the original chemical shift:

  signal B shifts and signal A remains unchanged (traces *b* or c), or vice-versa (traces *d* or *e*). In these cases, the SA is completely distributed in the CC/s corresponding to the marker$^{ENDO}$ signals showing a shift (marker $^{ENDO}$ signals in the different CCs are isochronous);
  - each component of the marker $^{ENDO}$ signal splits in two peaks: one shifted and one unchanged with respect to the original one (traces *f* or *g*). The SA is completely distributed in the CCs corresponding to the marker$^{ENDO}$ signals undergoing shift;
  - if all marker$^{ENDO}$ signals shift, the SA is distributed among all the CCs.

In all the situations disclosed in Figures 1 and 2, the CCs can be easily identified by the characteristic features of the corresponding marker$^{ENDO}$ signals. In particular, it is possible to utilize the areas under the signal, which are proportional to the amount of ENDO in the different CCs (if these data are known), or the signal linewidths which are usually different for different CCs. Once the CCs are identified, the CCs where the SA is present results univocally assigned.

Regarding point d).

In principle, the SA suitable for the measure of EXO cellular uptake should be the one which is able to induce the largest $LIS^{EXO}$ signal for, at least, one of the EXO signals (preferably the $marker^{EXO}$ signal), which is able to distribute in only one CC and whose $[SA]_{CC}$ can be measured with high precision. Combining the results obtained from the foregoing points a) to c) it is possible to select the preferred SA and nucleus combination. However, often said SA and nucleus combination is selected just through a compromise among the different indications resulting from points a) to c).

**Said determination of step 2)** comprises:

e) acquiring the MAS-NMR spectrum of the *in vitro* sample, containing the EXO under investigation, in absence of SA and recognising the $marker^{EXO}$ signal/s;

f) re-acquiring the same spectrum after addition of an amount of the preferred SA enough to induce a significant LIS of marker $^{EXO}$ signal/s;

g) comparing the $marker^{EXO}$ signal/s of points e) and f), wherein, since the CC/s where the SA distributes is/are known, the CC/s where the EXO is present result assigned.

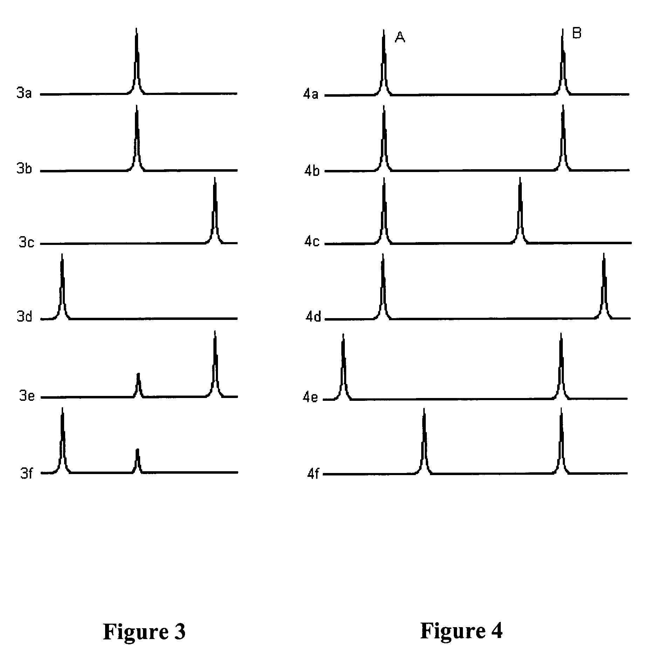

The MAS-NMR spectrum can show different situations, as disclosed in enclosed Figures 3-6, which are hereinafter disclosed.

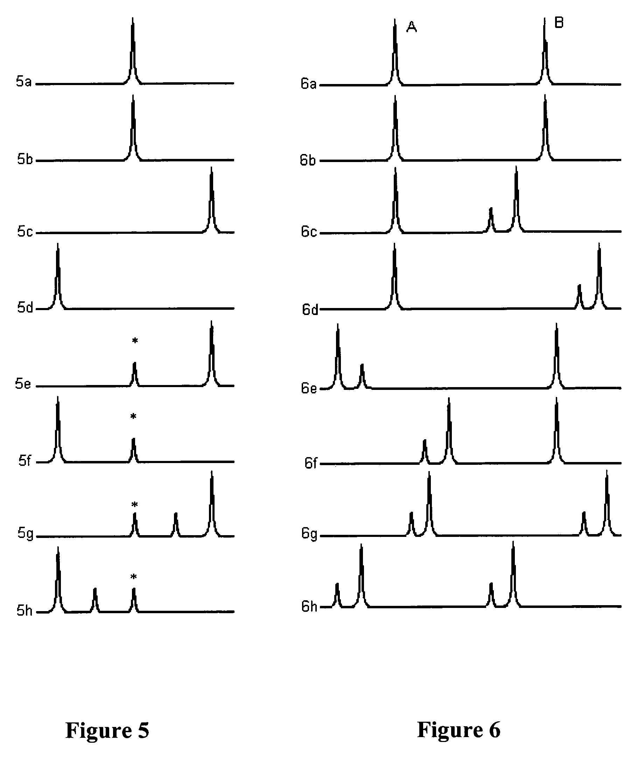

In Figures 3 and 4, it is described the use of a preferred SA which stays in only one type of CC.

*Figure 3 - traces a - f.* Trace a shows a $marker^{EXO}$ signal (in this case it is a single, one component signal) in absence of the SA.

Different situations are possible, following the addition of the SA:

- the marker $^{EXO}$ signal remains unchanged (trace *b*). In this case the EXO stays completely in a CC different from the one in which the SA is present, i.e. all the EXO is $EXO_{CC \neq SA}$;
- the marker $^{EXO}$ signal remains a single peak but shifts with respect to the original position (traces *c* or *d*). In this case the EXO stays in the same CC in which the SA is present, i.e. all the EXO is $EXO_{CCSA}$;
- the marker $^{EXO}$ signal splits in, at least, two components (traces *e* or *f*). The EXO corresponding to the shifted signal is $EXO_{CCSA}$ while the EXO corresponding to the unshifted signal is $EXO_{CC \neq SA}$. The ratio between the areas of the two signals is proportional to the ratio between $[EXO_{CCSA}]$ and $[EXO_{CC \neq SA}]$.

It is possible that the cases shown in trace e or f appear as the case reported in trace *b*. This can happen when the LIS of $marker^{EXO}$ signal is too small, i.e. insufficient for separate the $EXO_{CCSA}$ signal from the one due to the $EXO_{CC \neq SA}$. To avoid this possible mistake, in the case of spectra like the one of trace *b*, an ulterior amount of SA is to be added to the sample, to check the existence of two or more overlapped signals.

*Figure 4 - traces a - f.* Trace a shows a $marker^{EXO}$ signal having two (or many) components, in absence of the SA. These components are due to the presence of the EXO in different CCs, or to the fact that the EXO has two $marker^{EXO}$ signals, for example as a consequence of two different chemical specie such as isomers or conformers, or due to the action of specific bonds with ENDOs, membrane, etc.).

Different situations are possible, following the addition of the SA:

- each $marker^{EXO}$ signal remains unchanged (trace *b*). In this case the EXO stays in CCs different from the ones where the SA is present, i.e. all the EXO is $EXO_{CC \neq SA}$;
- some $marker^{EXO}$ signals remain unchanged while other signals shift: signal A shifts while signal B remain unchanged (trace *c* and *d*) or vice-versa (traces *e* and *f*). In this case the shifted signals correspond to $EXO_{CCSA}$ while the other ones correspond to $EXO_{CC \neq SA}$;
- all the $marker^{EXO}$ signals shift. In this case all the EXO is $EXO_{CCSA}$.

It is possible that the cases shown in trace *c-f* appear as that reported in trace *b*. This can happen when the LIS is too small, i.e. insufficient for separating the $EXO_{CCSA}$ signals from those due to $EXO_{CC \neq SA}$. To avoid this potential mistake, in the case of spectra like that in trace *b*, an ulterior amount of SA is added to the sample, to check the existence of two or more overlapped signals.

If, at point c) of step 1) it has been discovered that the SA only stays in the extra-cellular compartment (o), it is possible to affirm that $EXO_{CCSA} = EXO_o$ and $EXO_{CC \neq SA} = EXO_i$. Vice-versa, if at said point c) it has been discovered that the SA only stays in the intra-cellular compartment (i), it is possible to affirm that $EXO_{CCSA} = EXO_i$ and $EXO_{CC \neq SA} = EXO_o$.

In Figures 5-6 it is described the use of a preferred SA which is shared among many compartments.

*Figure 5 - traces a - h.* Trace a shows a marker$^{EXO}$ signal, showing only one component, in absence of the SA. Different situations are possible, following the addition of the SA:

- the marker$^{EXO}$ signal remains unchanged (trace *b*). In this case the EXO stays in one or more CC/s different from the one where the SA is present.
   The EXO is all $EXO_{CC \neq SA}$;
- the marker$^{EXO}$ signal shift (traces *c - d*). In this case the EXO is all $EXO_{CCSA}$; and SA stay in only one CC, (or in different CCs where, casually, marker$^{EXO}$ are isochronous);
- the marker$^{EXO}$ signal shifts and peak (*) remain unshifted (traces *e - f*). In this case the shifted signals correspond to $EXO_{CCSA}$ and signal (*) correspond to $EXO_{CC \neq SA}$;
- the marker$^{EXO}$ signal splits in two or more components and peak (*) remain unshifted (traces *g - h*). In this case the shifted signals correspond to $EXO_{CCSA}$ and signal (*) correspond to $EXO_{CC \neq SA}$.

*Figure 6 - traces a - h.* Trace a shows a marker$^{EXO}$ signal showing two (in general many) components, in absence of the SA. Different situations are possible, following the addition of the SA:

- the marke$^{EXO}$ signals remain unchanged (trace *b*). In this case the EXO stays in one or more CC different from those where the SA is present. The EXO is all $EXO_{CC \neq SA}$;
- one signal remains unchanged while the other one shifts (trace *c, d, e, f*). It is also possible that the shifted signal also splits in two or more components. The shifted signals correspond to $EXO_{CCSA}$ and the unshifted signal corresponds to $EXO_{CC \neq SA}$;
- all the signals shift (trace *g, h*). In this case all the EXO is $EXO_{CCSA}$.

Since the CCs where the SA distributes are known, upon comparison between the marker$^{EXO}$ signal/s in absence and presence of the SA, also the CC/s where the EXO is present result assigned.

**Said measurement of step 3)** is performed in accordance to the following possible situations.

- All the EXO is $EXO_{CC \neq SA}$ (as disclosed in Figures 3*b*; 4*b*; 5*b*; 6*b*). In this case, $[EXO_{CC \neq SA}]$ is obtained by considering the amount of EXO added to the sample and the volume of the CC where EXO is present (CC is known from the foregoing point c) of steps 1).
- All the EXO is $EXO_{CCSA}$ and the SA stays in only one CC (as disclosed in Figures 3*c*; 3*d*; 4*c*; 4*d*). To calculate $[EXO_{CCSA}]$ two procedures are possible:

   - if the volume of the CC where the EXO is present is known, $[EXO_{CCSA}]$ is obtained by considering the amount of EXO added to the sample and the volume of the CC where the EXO is present (CC is known from the foregoing point c) of step 1).
   - if the volume of the CC where the EXO is present is not known, it is necessary to have available a graph of $LIS^{EXO}$ signal vs. $\rho^{EXO} = [SA]/[EXO]$, by which $[EXO_{CCSA}]$ can be directly determined, once $\rho^{EXO}$ is experimentally measured and $[SA]_{CC}$ is known. To built $_{LIS}^{EXO}$ signal vs. $\rho^{EXO}$ graph, a series of MAS-NMR spectra of the EXO under investigation must be acquired (in a medium as similar as possible to the one of the *in vitro* sample, such as physiological solution, plasma, etc.), by using a known [EXO] and different known [SA]. At each variation of [SA]/[EXO], $LIS^{EXO}$ signal is measured. [SA]cc can be determined by using the $LIS^{ENDO}$ signal vs. $\rho^{ENDO}$ graphs built at the foregoing point b) of step 1).

- The EXO is partially $EXO_{CCSA}$ and $EXO_{CC \neq SA}$, and the SA stays in only one CC (as disclosed in Figures 3*e*; 3*f* 4*e*; 4*f*). Since the amount of EXO added to the sample is known, the ratio between the area of the peaks, corresponding to $EXO_{CCSA}$ and $EXO_{CC \neq SA}$, supplies the ratio $[EXO_{CCSA}]/[EXO_{CC \neq SA}]$ and if the volume of at least one of the CCs is know, the values of $[EXO_{CCSA}]$ and $[EXO_{CC \neq SA}]$ result determined. If CCs volumes are not know, $[EXO_{CCSA}]$ can be determined as described in the previous case (by using $LIS^{EXO}$ signal vs. $\rho^{EXO}$ and $LIS^{ENDO}$ signal vs. $\rho^{ENDO}$ graphs), consequently, also $[EXO_{CC \neq SA}]$ results determined.
- The EXO and the SA distributes into more than one CC (as disclosed in Figures 5*c*-5*h*; 6*c*-6*h*). In this case it is possible to determine all the compartmental concentrations of the EXO, but additional stoichiometric calculations are required, whose complexity is different for the different situations, depending on the availability of some or all the CC volumes and the number of CCs where the SA and the EXO distribute. In any case, by means of $LIS^{EXO}$ signal vs. $\rho^{EXO}$ and $LIS^{ENDO}$ signals vs. $\rho^{ENDO}$ graphs, the values of the compartmental concentrations of the SA can be determined and, consequently, the compartmental concentrations of EXO can also be calculated. This situation is disclosed in the following theoretical example. **Example** - In the case where the SA distributes into three different CCs (named as CC1, CC2 and CC3) and three shifted marker$^{EXO}$ signals exist, the following stoichiometric relationships hold:

$$\rho^{ENDO}CC1 = [SA_{CC1}] / [ENDO_{CC1}]$$

$$\rho^{ENDO}_{CC2} = [SA_{CC2}] / [ENDO_{CC2}]$$

$$\rho^{ENDO}_{CC3} = [SA_{CC2}] / [ENDO_{CC2}]$$

$$\rho^{ENDO}_{CC3} = [SA_{CC3}] / [ENDO_{CC3}]$$

The following equation set (equation set no. 1) can be obtained:

$$"\rho^{ENDO}_{CC1}" = (SA_{CC1} / V_{CC1}) / (ENDO_{CC1} / V_{CC1})$$

$$"\rho^{ENDO}_{CC2}" = (SA_{CC2} / V_{CC2}) / (ENDO_{CC2} / V_{CC2})$$

$$"\rho^{ENDO}_{CC3}" = (SA_{CC3} / V_{CC3}) / (ENDO_{CC3} / V_{CC3})$$

$$"SA_T" = SA_{CCI} + SA_{CC1} + SA_{CC3}$$

$$"ENDO_T" = ENDO_{CCI} + ENDO_{CC2} + ENDO_{CC3}$$

$$"V_T" = V_{CC1} + V_{CC2} + V_{CC3}$$

$$"A_{CC1} / A_{CC2}" = ENDO_{CC1} / ENDO_{CC2}$$

$$"A_{CC1} A_{CC3}" = ENDO_{CC1} ENDO_{CC3}$$

$$"A_{CC2} A_{CC3} "= ENDO_{CC2} / ENDO_{CC3}$$

wherein:

$V_{CC}$ = volume of the CC, A = area under the signal, $SA_{CC}$ = amount of the SA in the CC, $ENDO_{CC}$ = amount of the ENDO in the CC, T = total. Quoted terms are known or easily measured, while the others terms are unknown variables.

Globally, there are nine variables ($ENDO_{CC1}$, $ENDO_{CC2}$, $ENDO_{CC3}$, $SA_{CC1}$, $SA_{CC2}$, $SA_{CC3}$, $V_{CC1}$, $V_{CC2}$, $V_{CC3}$) in nine equations. To solve the system, it is possible to use different known mathematical methods.

It is also possible that the values of $V_{CC1}$, $V_{CC2}$, $V_{CC3}$ are all, or partially, known with sufficient precision. In this case the solution of the system results simplified.

Usually some or all of the values of $ENDO_{CC1}$, $ENDO_{CC2}$, $ENDO_{CC3}$ are also known, thus allowing a drastic simplification of calculation.

Moreover, it is also possible that only one marker$^{ENDO}$ signal exists, allowing a reduction of the number of equations and variables.

In any case, the values of $SA_T$, $SA_{CC1}$, $SA_{CC2}$, $SA_{CC3}$, $V_{CC1}$, $V_{CC2}$. and $V_{CC3}$ can be determined. Consequently, all the $[SA_{CC}]$ can be also determined. From NMR-MAS spectra the values of $LIS^{EXO}_{CC1}$, $LIS^{EXO}_{CC2}$ and $LIS^{EXO}_{CC3}$ signals can also be measured and by the graphs of $LIS^{EXO}$ signal vs. $\rho^{EXO}$, the correspondent values of $\rho^{EXO}_{CC1}$, $\rho^{EXO}_{CC2}$, $\rho^{CC}_3$ are obtained. Being $[SA_{CC}]$ known, it is possible to determine the $[EXO_{CC}]$ by the following set of equations:

$$[EXO_{CC1}] = [SA_{CC1}] / \rho^{EXO}_{CC1}$$

$$[EXO_{CC2}] = [SA_{CC2}] / \rho^{EXO}_{CC2}$$ equation set no. 2

$$[EXO_{CC3}] = [SA_{CC3}] / \rho^{EXO}_{CC3}$$

$$[EXO_{CC1}] / [EXO_{CC2}] = A_{CC1} / A_{CC2}$$

$$[EXO_{CC1}] / [EXO_{CC3}] = A_{CC1} / A_{CC3}$$ equation set no. 3

$$[EXO_{CC2}] / [EXO_{CC3}] = A_{CC2} / A_{CC3}$$

To solve the system, it is necessary to calculate all the possible combinations and to verify which [EXOs] are congruent with both sets of equations **2** and **3**.

To better clarify what above disclosed, the same example is expressed in numbers.

Let us suppose to have the compartmental distribution reported in Table 1 and to label the three different compartments as 1, 2 and 3.

The experimental data are:

- from the measured LIS: $\rho_1$, = 0.02; $\rho_2$ = 0.093; $\rho_3$ = 0.016

- from equation set **1** : $[SA_{CC1}]$ = 0.2; $[SA_{CC2}]$ = 1.4; $[SA_{CC3}]$ = 0.4

- from MAS-NMR spectra calculation of the areas gives:

- $A_1$ = 66.66; $A_2$ =100; $A_3$ =166.66

From these values it is possible to calculate (by equation set **2**) all the possible values of $[SA_{CC}]/\rho^{EXO}$ i.e. $[EXO_{CC}]$, in the three compartments (see values reported in Table 2). By these [EXOs] values it is possible to calculate all the values of the left terms of equation set **3**, for all the possible combinations (see data reported in Table 3). Then it is possible to calculate the right terms of equation set **3**, for all the possible combinations, by using the experimental values of the signal areas (see data reported in Table 4).

Table 1

| | SA | EXO | $\rho$ | signal area |
|---|---|---|---|---|
| $[SA_{CC1}]$ | 0.2 | 10 | 0.02 | 66.66 |
| $[SA_{CC2}]$ | 1.4 | 15 | 0.093 | 100 |
| $[SA_{CC3}]$ | 0.4 | 25 | 0.016 | 166.66 |
| Total added mM of SA = 2, total added mM of EXO = 50. | | | | |

Table 2

| | $[SA_{CC1}]$ | $[SA_{CC2}]$ | $[SA_{CC3}]$ |
|---|---|---|---|
| $\rho_1$ | $[EXO_{CC1}]$ = 10.00 | $[EXO_{CC2}]$ = 70.00 | $[EXO_{CC3}]$= 20.00 |
| $\rho_2$ | $[EXO_{CC1}]$ = 2.14 | $[EXO_{CC2}]$ = 15.00 | $[EXO_{CC3}]$ = 4.29 |
| $\rho_3$ | $[EXO_{CC1}]$ = 12.50 | $[EXO_{CC2}]$ = 87.50 | $[EXO_{CC3}]$= 25.00 |

Table 3

| [EXO$_{CC1}$]/[EXO$_{CC2}$] | 0.14 | **0.67** | 0.11 |
|---|---|---|---|
| | 0.03 | 0.14 | 0.02 |
| | 0.18 | 0.83 | 0.14 |
| [EXO$_{CC1}$]/[EXO$_{CC3}$] | 0.50 | 2.33 | **0.40** |
| | 0.11 | 0.50 | 0.09 |
| | 0.63 | 2.92 | 0.50 |
| [EXO$_{CC2}$]/[EXO$_{CC3}$] | 3.50 | 16.33 | 2.80 |
| | 0.75 | 3.50 | **0.60** |
| | 4.38 | 20.42 | 3.50 |

Table 4

| | A$_1$ | A$_2$ | A$_3$ |
|---|---|---|---|
| A$_1$ | -- | 1.50 | 2.50 |
| A$_2$ | 0.67 | -- | 1.67 |
| A$_3$ | **0.40** | **0.60** | -- |

The values reported in Tables 3 which fit with those in Table 4, are highlighted in bold characters. They correspond to:

[EXO$_{C1}$]/[EXO$_{C2}$] = **0.67** obtained by [EXO$_{C1}$]= 10 and [EXO$_{C2}$] = 15
[EXO$_{C1}$]/[EXO$_{C3}$] - **0.40** obtained by [EXO$_{C1}$]- 10 and [EXO$_{C3}$] = 25
[EXO$_{C2}$]/[EXO$_{C3}$] = **0.60** obtained by [EXO$_{C2}$]= 15 and [EXO$_{C3}$] = 25
A$_1$/A$_2$ = **0.67** obtained by A$_1$ = 66.66 and A$_2$ = 100
A$_1$/A$_3$ = **0.40** obtained by A$_1$ = 66.66 and A$_3$ = 166.66
A$_2$/A$_3$ = **0.60** obtained by A$_2$ = 100 and A$_3$ = 166.66

therefore: [EXO$_{C1}$]= 10; [EXO$_{C2}$] = 15; [EXO$_{C3}$] = 25 A$_{C1}$ = 66.66; A$_{C2}$ = 100; A$_{C3}$ = 166.66

Accordingly, the solution of the system has allowed to calculate the values of [EXO$_{CC1}$], [EXO$_{CC2}$], [EXO$_{CC3}$].
Summarizing, step **3**) is performed by taking into account the CC/s where the EXO is present, the volume/s of said CC/s, the value/s of the area/s under the marker$^{EXO}$ signal/s, the calculated $\rho^{EXO}$ for every CC in which the EXO is present and solving the system of equations connecting said parameters.

**EXPERIMENTAL SECTION**

**Determination of cellular uptake of aspirin in red blood cells**

In this example,

EXO = Aspirin.
ENDO = sodium ions.
SA = Dy-BOPTA (Dy is the symbol of Dysprosium, one of the lanthanides having characteristics of shift agent).

The nucleus used to determine the CCs where the SA is present is sodium-23.
The nucleus used to determine Aspirin cellular uptake is proton.
The *in vitro* determination has been performed on HRBC, obtained by human blood treated as described in the following.
<u>Centrifugation</u>: the employed centrifuge was HERAEUS SEPATECH OMNIFUGE 2 ORS, rotor model 3360. Centrifugation was done at 2109 g (equivalent to 3500 rpm) at 4°C for 15 minutes.

Living HRBC preparation: human blood (to which sodium citrate has been added as an anticoagulant) was centrifuged. After that, HRBC pellets were separated from serum and white cell interface, being careful to obtain a solution of red cells free of white cells; accordingly, red cells with 80% hematocrit were obtained.

Dy-BOPTA stock solution: a 0.1 M stock solution of Dy-BOPTA was used in all the measurement to obtain the suitable [SA].

Aspirin stock solution: a 1 M stock solution of aspirin was used in all the measurements.

Aspirin in HRBC: a sample containing 1 ml of HRBC (80% hematocrit), 100 µmoles of aspirin (i.e. 100 µl of aspirin stock solution) and 8 µmoles of Dy-BOPTA (i.e. 80 µl of Dy-BOPTA stock solution) was employed to measure the uptake of aspirin in HRBC.

$^{23}$Na NMR spectra: all the $^{23}$Na NMR spectra have been acquired on a Bruker AMX 400 WB spectrometer at the frequency of 105.84 MHz. A multinuclear CP-MAS probehead with double bearing and 4 mm rotor have been employed.

Experimental conditions were: sample rotating speed = 3500 Hz; spectra width = 16000 Hz (c.a. 150 ppm); time domain data points = 16K; number of scans = 1024; pulse length = 15 µs; recycle delay = 2s; Fourier Transform by 10 Hz of enhancement multiplication function, sample temperature = 25°C.

Proton $^1$H NMR spectra: all the $^1$H NMR spectra have been acquired on a Bruker AMX 600 SB spectrometer at the frequency of 600.13 MHz. A multinuclear HR-MAS probehead with double bearing and 4 mm rotor with 12 µl spherical insert have been employed. Experimental conditions were: sample rotating speed = 3500 Hz; spectra width = 12,000 Hz (c.a. 20 ppm); time domain data points = 128 K; number of scans = 16; pulse length = 11.7 µs; recycle delay = 10 s; Fourier Transform by 0.5 Hz of enhancement multiplication function, sample temperature = 25°C.

Dy-BOPTA employed in the present experiment has been selected from other Dysprosium chelates as preferred SA and sodium ions have been selected as preferred ENDO. This selection has been done on the basis of the procedure previously described at Step 1, points a) -d). All measurements have been performed by means of $^{23}$Na MAS-NMR spectra, as a consequence of the choice to use sodium ions as ENDO. $^{23}$Na MAS-NMR spectra of HRBC sample containing different amounts of Dy-BOPTA were acquired.

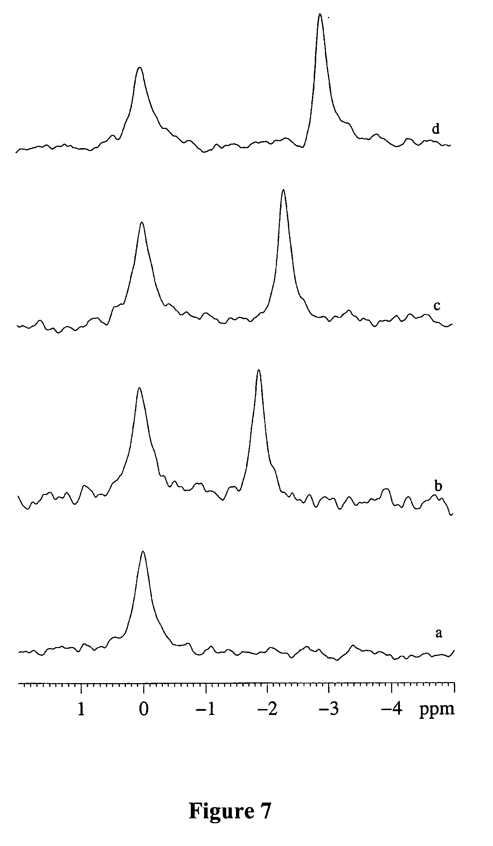

The results are disclosed in enclosed Figure 7.

*Figure 7* - in *trace a,* reports $^{23}$Na MAS-NMR spectrum of the HRBC sample, in absence of Dy-BOPTA, while traces *b - d* report the spectra of the same sample, but after increasing additions of the SA, i.e. Dy-BOPTA. The observed behaviour is like the one reported in Figure 1*b,* i.e. the original ENDO signal splits in two components. The first one remains at the same chemical shift of the original signal, while the other signal results shifted. That means that the SA, i.e. Dy-BOPTA, is completely in the CC correspondent to the LIS marker$^{ENDO}$ signal. This CC is the extra-cellular compartment, as reported in literature (12). Value of [SA] obtained by means of LIS$^{ENDO}$ signal vs. ρ$^{ENDO}$ graph, confirms that all the SA is in the extra-cellular compartment.

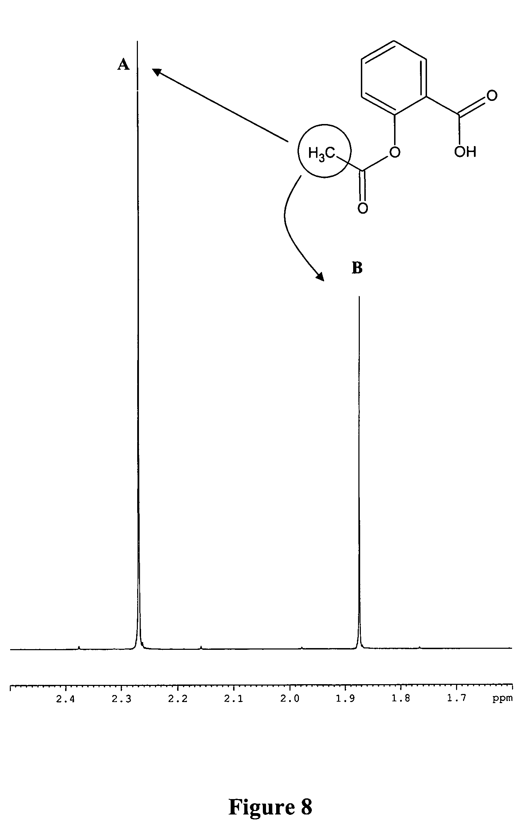

Proton spectra have been employed to determine aspirin cellular uptake, because $^1$H is the only nucleus present in aspirin having a high NMR sensitivity. The $^1$H NMR spectra of aspirin in water shows two signals (A and B), in correspondence to the methyl group, as disclosed in enclosed Figure 8. This case is similar to the one shown in Figure 4 trace *a*. Both the two signals are marker$^{EXO}$ signals.

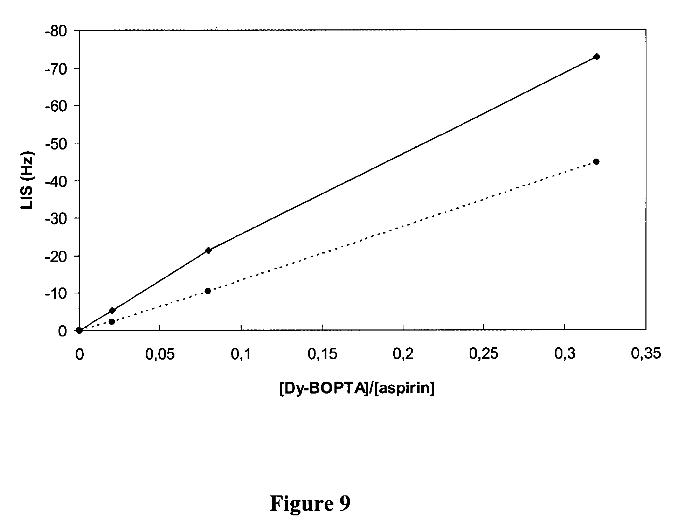

The calculated graph of LIS$^{ASPIRIN}$ vs. ρ$^{ASPIRIN}$= [Dy-BOPTA]/[ASPIRIN] is reported in Figure 9, for both the marker$^{EXO}$ signals.

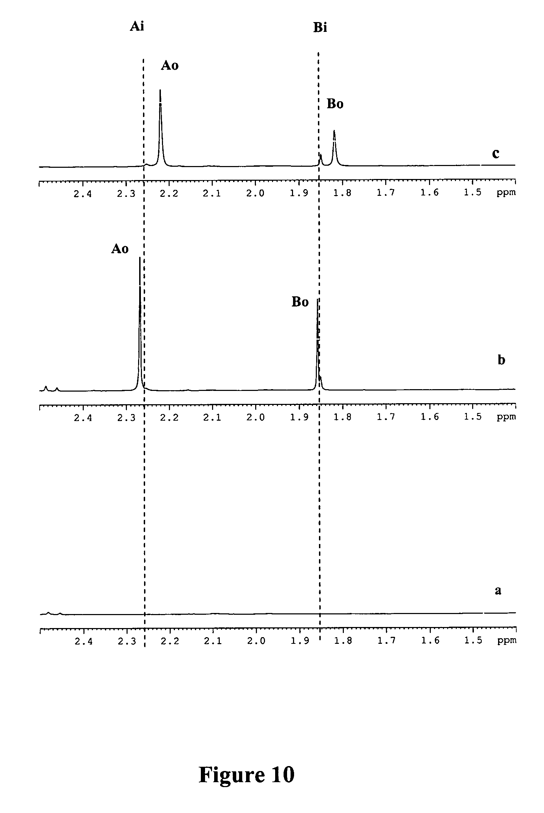

The measurement of cellular uptake of aspirin by HRBC is calculated from the spectra reported in the enclosed Figure 10.

Firstly, the $^1$H NMR-MAS spectrum of HRBC was acquired (Figure 10 - trace *a*) in absence either of aspirin (EXO) or of Dy-BOPTA (SA).

Then 100 µl of aspirin 1M stock solution were added and the spectrum repeated (Figure 10 - trace *b*). In spectrum of *trace b* the two components for each signal A and B of the methyl group of aspirin are well visible, i.e. four peaks exist in the proton MAS-NMR spectrum. The splitting of signals A and B induce to suppose that the molecules of aspirin in the extra- and intra-cellular are in magnetically different environments, i.e. the four observed signals correspond to signals A e B, respectively into intra- and extra-cellular compartments.

Last, 80 µl of Dy-BOPTA stock solution were also added to the sample and the spectrum were again re-acquired (Figure 10 - *trace c*). Now the four peaks show a larger difference in their chemical shift with respect to *trace b.* Two components result unshifted with respect to the original marker$^{EXO}$ signals while the other two components are shifted.

Aspirin correspondent to the unshifted marker$^{EXO}$ signals is ASPIRIN$_{CC≠SA}$, i.e. aspirin in the intra-cellular compartment.

On the contrary, aspirin correspondent to the shifted marker $^{EXO}$ signals is ASPIRIN$_{CCSA}$, i.e. aspirin in the extra-cellular compartment. This behaviour in presence of the SA, also confirms that the four signals of aspirin, which appear in the spectrum in absence of the SA, are due to intra- and extra-cellular component of aspirin.

The ratio between the areas of the two sets of peaks, directly gives the ratio between aspirin in the two cellular compartments for each type A and B. Since the volume of the two cellular compartments can be calculated, it is possible to obtain the ratio: [aspirin]$_o$/[aspirin]$_i$.

<u>Data</u>:

Peak area of marker$^{EXO}$(A)$_i$ = 5.84
Peak area of marker$^{EXO}$(A)$_o$ = 88.28
Peak area of marker$^{EXO}$(B)$_i$ = 11.13
Peak area of marker$^{EXO}$(B)$_o$ = 45.50
Volume of intracellular fluid = 0.8 ml
(because 1 ml of HRBC with 80% hematocrit were used)
Volume of extracellular fluid = 0.2 ml + 0.1 ml + 0.08 ml = 0.38 ml
(0.2 ml = extracellular fluid in HRBC; 0.1 ml = volume of added aspirin solution; 0.08 ml = volume of added SA solution)
Total of added aspirin = 100 μmoles

Calculations are the following:

μmoles aspirin$_i$ (A) = 5.84 x 100/(5.84+88.28+11.13+45.50) = 3.87
μmoles aspirin$_o$ (A) = 88.28 x 100/(5.84+88.28+11.13+45.50) = 58.56
μmoles aspirin$_i$ (B) = 11.13 x 100/(5.84+88.28+11.13+45.50) = 7.38
μmoles aspirin$_o$ (B) = 45.50 x 100/(5.84+88.28+11.13+45.50) = 30.19
concentration of aspirin$_i$ (A) = 3.87 / 0.8 = 4.83 mM
concentration of aspirin$_o$ (A) = 58.56 / 0.38 = 154.10 mM
concentration of aspirin$_i$ (B) = 7.38 / 0.8 = 9.22 mM
concentration of aspirin$_o$ (B) =30.19 / 0.38 = 79.44 mM
[aspinn]$_o$/[aspirin]$_i$ (A) = 154.10 / 4.83 = 31.90
[aspirin]$_o$/[aspirin]$_i$ (B) = 79.44 / 9.22 = 8.611

**References**

1. Zaplatin N., Baker K. A., Kleinhans. F. W., Effectiveness and Toxicity of Several DTPA Broadening gents for Biological ESR Spectroscopy, J. Magn. Res. Ser. B 110, 249 - 254 (1996).

2. Artemov D, Solaiyappan M, Bhujwalla ZM, Magnetic resonance pharmacoangiography to detect and predict chemotherapy delivery to solid tumors, Cancer Res 61:7, 3039-44 (2001).

3. Colet J. M., Vander Elst L, Muller RN, Dynamic evaluation of the hepatic uptake and clearance of manganese-based MRI contrast agents: a 31P NMR study on the isolated and perfused rat liver. *J Magn. Reson. Imaging* 8:3 663-9 (1998).

4. Chirico G., Cannone F., Olivini F., Beretta S., Baldini G., Diaspro A., Robello M., "A combined confocal and spectroscopic TPE architecture for the identification of single fluorescent molecules", SPIE proc., Multiphoton Microscopy in the Biomedical Sciences, A. Periasamy, P.T.C. So, Eds., vol.4262, p.407-413 (2001).

5. Chirico G., Cannone F., Beretta S., Baldini G., Diaspro A., "Single Molecules Studies By Means Of The Two-Photon Fluorescence Distribution", *Microsc.Res.Tech.,* (2001) 55:359-364.

6. Degani H., Elgavish G. A., Ionic Permeabilities of Membranes, *FEBS Lett.* 90(2), 357 - 360 (1978).

7. Gupta R. K., Gupta P., Direct Observation of Resolved Resonances from Intra- and Extracellular Sodium-23 Ions in NMR Studies of Intact Cells and Tissues Using Dysprosium(III)tripoly phosphate as Paramagnetic Shift Reagent, *J. Magn. Reson.* 47, 344 - 350 (1982).

8. Miller S. K., Chu W. J., Pohost G. M., Elgavish G. A., Improvement of Spectral Resolution in Shift-Reagent-Aided 23Na NMR Spectroscopy in the Isolated Perfused Rat Heart System, *Magn. Reson. Med.* 20, 184 - 195 (1991).

9. Aime S, Botta M, Mainero V, Terreno E., Separation of intra- and extracellular lactate NMR signals using a lanthanide shift reagent. *Magn Reson Med* 47:1 10-3 (2002).

10. Calabi L., Alfieri G., Biondi L., De Miranda M., Paleari L., Ghelli S. - Application of high resolution magic angle spinning NMR spectroscopy to define the cell up-taking of MRI Contrast Agents *J. Magn. Reson.* 156, 222-229 (2002).

11. Calabi L., Paleari L., Biondi L., Linati L., De Miranda M., Ghelli S., Application of $^1$H and $^{23}$Na Magic Angle Spinning NMR Spectroscopy to define the HRBC up-taking of MRI contrast agents, accepted on *J. Magn. Reson.* 164, 28-34 (2003).

12. Springer C. S. Jr., Physicochemical Principles Influencing Magnetopharmaceuticals in "NMR in Physiology and Biomedicine" (R.J. Gillies, ed.), pp. 75-99, Academic Press Inc., Orlando (1994).

13. Live D. H., and Chan S. I., Bulk Susceptibility Corrections in Nuclear Magnetic Resonance Experiment Using Superconducting Solenois, Anal. Chem. 42(7), 791-792(1970).

14. Pályka, W. Huang, and C. S. Springer Jr., The Effects of Bulk Magnetic Susceptibility in NMR, Bull. Magn. Reson. 17,46 - 53 (1995).

15. Shachar-Hill Y., Berfroy D. E., Pfeffer P. E., and Ratcliffe R. G., Using Bulk Magnetic Susceptibility to Resolve Internal and External Signals in the NMR Spectra of Plant Tissues, J. Magn. Reson. 127, 17 - 25 (1997).

16. Humpfer E., Spraul M., Nicholson A. W., Nicholson J. K., and Lindon J. C., Direct Observation of Resolved intra- and extracellular Water Signals in Intact Human Red Blood Cells Using 1H MAS NMR Spectroscopy, Magn. Res. Med. 38, 334 - 336 (1997).

**Claims**

1. A method for the quantitative *in vitro* cellular-uptake measurement of an exogenous substance, **characterized in that** it comprises applying MAS-NMR spectroscopy to an *in vitro* cellular sample, in combination with a shift agent.

2. The method according to claim 1, **characterized in that** said *in vitro* sample is selected from cells, tissues and organs.

3. The method according to claim 1, **characterized in that** said shift agent is selected from substances which contain metal-ions of the lanthanide group.

4. The method according to claim 3, in which that said metal-ions are selected from: $Ce^{3+}$; $Pr^{3+}$; $Nd^{3+}$; $Pm^{3+}$; $Sm^{3+}$; $Eu^{3+}$; $Tb^{3+}$; $Dy^{3+}$; $Ho^{3+}$; $Er^{3+}$; $Tm^{3+}$; $Yb^{3+}$.

5. The method according to anyone of the foregoing claims, in which said shift agents are in the form of chelate-complexes of said lanthanide metal-ions with: EDTA (ethylenediaminetetracetic acid); PCTA (3,6,9,15-tetraazabicyclo-[9.3.1]-pentadeca-1(15)11,13-triene-3,6,9-tris (methanephosphonic) acid); BOPTA ((4RS)-[4-carboxy-5,8,11-tris (carboxymethyl)-1 -phenyl-2-oxa-5,8,11 -triaza-tri decan-13-oic acid]); DTPA (di-ethylenetriamine pentaacetic acid); DOTA (1,4,7,10-tetraazocyclo-dodecane-N,N',N'',N''''-tetraacetic acid); DO3A (1,4,7,10-tetra azacyclododecane-1,4,7-triacetic acid) and/or derivatives thereof; DOTP (1,4,7,10-tetraazacyclododecane-1,4,7,10-tetrakis (methane phosphonic)acid; ([3β(R),5β,12α]-3-[[4-[bis-[2-bis-(carboxymethyl) amino]-ethyl]amino]-4-carboxy-1-oxo-butyl]amino]-12-hydroxy cholan-24-oic acid).

6. The method according to anyone of the foregoing claims, comprising the following steps:

    **1)** selection of the shift agent (SA) and nucleus combination to be employed for the measurement of cellular uptake of the exogenous substance (EXO) under investigation;

**2)** determination of the cellular compartment/s (CC/s) in which said exogenous substance (EXO) distributes;
**3)** measurement of said exogenous substance (EXO) compartmental concentration, i.e. of said EXO cellular uptake.

**7.** The method according to claim 6, in which said step 1) comprises:

a) recognising a set of possible candidates for said SA and nucleus combination, on the basis of the LIS produced on at least one signal belonging to said EXO;
b) recognising a set of possible candidates for said SA, on the basis of the LIS produced on at least one signal belonging to an endogenous substance (ENDO);
c) recognising a set of possible candidates for said SA, on the basis of the CC/s in which they distribute;
d) selecting said SA and nucleus combination, on the basis of the informations gathered from points a), b) and c).

**8.** The method according to claim 6, in which said step 2) comprises:

e) aquiring the MAS-NMR spectrum of the *in vitro* sample, containing the EXO under investigation, in absence of the preferred SA and recognising the marker$^{EXO}$ signal/s;
f) re-acquiring the same spectrum after addition of an amount of the SA enough to induce a LIS of marker$^{EXO}$ signal/s;
g) comparing the marker$^{EXO}$ signal/s of points e) and f), wherein, since the CC/s where the SA distributes is/are known, the CC/s where the EXO is present result assigned.

**9.** The method according to claim 6, in which said step **3)** is performed by taking into account the CC/s where the EXO is present, the volume/s of said CC/s, the value/s of the area/s under the marker$^{EXO}$ signal/s, the calculated $\rho^{EXO}$ for every CC in which the EXO is present and solving the system of equations connecting said parameters.

**10.** Use of the method according to anyone of the foregoing claims for measuring cellular uptake of endogenous substances in *in vitro* samples.

Figure 1

Figure 2

**Figure 3**

**Figure 4**

Figure 5

Figure 6

**Figure 7**

**Figure 8**

Figure 9

**Figure 10**

**European Patent Office**

## EUROPEAN SEARCH REPORT

Application Number

EP 04 00 7388

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | CALABI LUISELLA ET AL: "Application of high-resolution magic-angle spinning NMR spectroscopy to define the cell uptake of MRI contrast agents." JOURNAL OF MAGNETIC RESONANCE (SAN DIEGO, CALIF. : 1997) JUN 2002, vol. 156, no. 2, June 2002 (2002-06), pages 222-229, XP002288453 ISSN: 1090-7807 * page 222, columns 1,2 * * page 223, columns 1,2 * * page 226, column 2 * * page 228, column 1 * ----- | 1-7,9,10 | G01N33/483 |
| D,X | CALABI LUISELLA ET AL: "Application of 1H and 23Na magic angle spinning NMR spectroscopy to define the HRBC up-taking of MRI contrast agents." JOURNAL OF MAGNETIC RESONANCE (SAN DIEGO, CALIF. : 1997) SEP 2003, vol. 164, no. 1, September 2003 (2003-09), pages 28-34, XP002288454 ISSN: 1090-7807 * the whole document * * columns 1-2 * * page 32, column 2 * * page 33, column 2 * * page 34, column 1 * ----- -/-- | 1-7,9,10 | |

TECHNICAL FIELDS SEARCHED (Int.Cl.7)

G01N

The present search report has been drawn up for all claims

| Place of search | Date of completion of the search | Examiner |
|---|---|---|
| Munich | 14 July 2004 | Veronese, A |

EPO FORM 1503 03.82 (P04C01)

**European Patent Office**

**EUROPEAN SEARCH REPORT**

Application Number

EP 04 00 7388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FREDLUND E ET AL: "Metabolite profiles of the biocontrol yeast Pichia anomala J121 grown under oxygen limitation" APPLIED MICROBIOLOGY AND BIOTECHNOLOGY, vol. 64, no. 3, 5 November 2003 (2003-11-05), pages 403-409, XP002288455 ISSN: 0175-7598 * page 403, columns 1,2 * * page 408, column 1 * | 1-10 | |
| A | HUMPFER E ET AL: "Direct observation of resolved intracellular and extracellular water signals in intact human red blood cells using 1H MAS NMR spectroscopy." MAGNETIC RESONANCE IN MEDICINE : OFFICIAL JOURNAL OF THE SOCIETY OF MAGNETIC RESONANCE IN MEDICINE / SOCIETY OF MAGNETIC RESONANCE IN MEDICINE. AUG 1997, vol. 38, no. 2, August 1997 (1997-08), pages 334-336, XP001182273 ISSN: 0740-3194 * the whole document * | 1-10 | |
| A | WO 00/13020 A (TRELLIS BIOINFORMATICS INC) 9 March 2000 (2000-03-09) * the whole document * | 1-10 | |

**TECHNICAL FIELDS SEARCHED (Int.Cl.7)**

The present search report has been drawn up for all claims

| Place of search | Date of completion of the search | Examiner |
|---|---|---|
| Munich | 14 July 2004 | Veronese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 1 586 899 A1

## ANNEX TO THE EUROPEAN SEARCH REPORT
## ON EUROPEAN PATENT APPLICATION NO.

EP 04 00 7388

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2004

| Patent document cited in search report | | Publication date | Patent family member(s) | | Publication date |
|---|---|---|---|---|---|
| WO 0013020 | A | 09-03-2000 | US | 6057092 A | 02-05-2000 |
| | | | AU | 5578899 A | 21-03-2000 |
| | | | WO | 0013020 A2 | 09-03-2000 |

EPO FORM P0459

For more details about this annex : see Official Journal of the European Patent Office, No. 12/82

26